# EUROPÄISCHE PATENTSCHRIFT

(11) **EP 1 608 994 B1**
(45) Veröffentlichungstag und Bekanntmachung des Hinweises auf die Patenterteilung: **18.07.2007**
(21) Anmeldenummer: 04724994.1
(22) Anmeldetag: 01.04.2004
(51) Int. Cl.: G01S 7/521, B60R 19/48

(54) **SENSORANORDNUNG EINER EINPARKHILFE**
SENSOR ARRANGEMENT OF A PARKING AID
ENSEMBLE CAPTEUR D'UN SYSTEME D'AIDE AU STATIONNEMENT

(30) Priorität: 02.04.2003 DE 10314862
(43) Veröffentlichungstag der Anmeldung: 28.12.2005
(73) Patentinhaber: Bayerische Motoren Werke Aktiengesellschaft, 80809 München (DE)
(72) Erfinder: EFFNER, Torben, 84034 Landshut (DE)
(74) Vertreter: Schernhammer, Herbert
(86) Internationale Anmeldenummer: PCT/EP2004/003484
(87) Internationale Veröffentlichungsnummer: WO 2004/088352

(56) Entgegenhaltungen:
- EP-A- 1 083 099
- DE-A- 10 203 387
- US-B1- 6 203 366

## Beschreibung

Die Erfindung betrifft die Sensoranordnung einer Einparkhilfe (PDC = Park Distance Control) nach dem Oberbegriff des Anspruchs 1.

PDC-Sensoren werden üblicherweise an den am weitesten vorstehenden hinteren und vorderen Fahrzeugbereichen angeordnet. Dies sind bei Personenkraftwagen normalerweise die Stoßfängerverkleidungen bzw. Stoßleisten.

Aus der DE 198 19 698 A1 ist eine Befestigungseinrichtung an einem Anbauteil für ein Kraftfahrzeug, insbesondere für eine Stoßfängerschutzleiste, bekannt, mit einer an dem Anbauteil vorgesehenen Aufnahme für ein an dem Anbauteil mittels einer Schnappverbindung zu befestigendes Teil, das kein elastisch verformbares Schnappverbindungselement besitzt, wobei diese Befestigungseinrichtung rationell hergestellt und handhabbar ist. Zu diesem Zweck ist die Aufnahme als ein komplementäres Gegenstück zu einem zur Erzielung einer Schnappverbindung formschlüssig aufsteckbaren Aufsteckelement in das andere Teil eingeformt. Dabei ist das Aufsteckelement mit für die Schnappverbindung gegenüber dem Anbauteil erforderlichen, elastisch verformbaren Bereichen versehen. Des Weiteren bildet das Aufsteckelement die für die Schnappverbindung gegenüber dem zu befestigenden Teil notwendigen elastischen Bereiche. Bei dieser Befestigungseinrichtung ist von Nachteil, dass diese Befestigungseinrichtung eine Vielzahl von Montageschritten erfordert.

Aus der DE 200 10 478 U1 ist ein Befestigungselement für ein zu befestigendes Bauteil, insbesondere ein Parksensor an einem Kraftfahrzeugteil insbesondere an einem Stoßfänger bekannt mit einem mit dem Kraftfahrzeugteil verbindbaren Verbindungsteil und einem das Bauteil aufnehmenden Einbaugehäuse, wobei das Verbindungsteil und das Einbaugehäuse aus unterschiedlichen Kunststoffmaterialien hergestellt sind und das Verbindungsteil und das Einbaugehäuse in ZweiKomponenten-Spcitzgießtechnik hergestellt sind. Bei diesem Befestigungselement ist von Nachteil, dass es aus einer Vielzahl von Teilen ausgebildet ist, die zudem in einem aufwendigen Herstellprozess hergestellt werden müssen.

Aus der DE 201 18 265 U1 ist eine Vorrichtung zum Befestigen von Parksensoren in Stoßfängersystemen bekannt, wobei die Aufnahme für den Parksensor aus einer im Wesentlichen zylindrischen Halterung und zwei integrierten federnden Befestigungselementen mit jeweils zwei Rastausnehmungen besteht, die mit den Rastelementen des Parksensors korrespondieren. Der Parksensor soll hierbei in einer Vorraststellung und einer Entraststellung montierbar sein, wobei die Vorraststellung zur Fixierung des Parksensors dient und erst nach dem Verbinden des Kabelbaums der Parksensoren die einzelnen Parksensoren in die Raststellung 2 gedrückt und endgültig positioniert werden. Auch bei einer solchen Vorrichtung sind somit eine Vielzahl von Montageschritten notwendig.

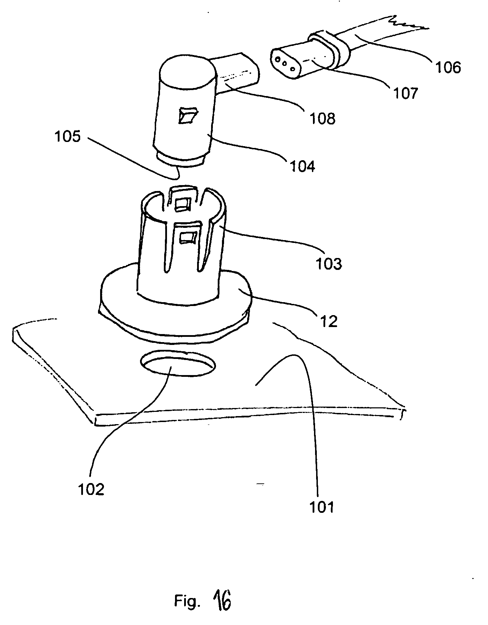

Es ist bei der Anmelderin üblich (Fig. 16), an den Stoßfängerverkleidungen 101 bzw. Stoßleisten 101 im Bereich einer kreisscheibenförmigen Freisparung 102 in der Stoßfängerverkleidung/Stoßleiste 101 einen im Wesentlichen hohlzylindrischen Halter 103 für einen PDC-Sensor 104 von der Stoßfängerverkleidungsinnenseite her an der Stoßfängerverkleidung 101 zu befestigen. Dies geschieht beispielsweise durch Kleben oder Rasten. Die im Wesentlichen zylindrisch ausgebildeten PDC-Sensoren 104 werden von innen nach außen in je einen Halter 103 eingesteckt und dort verrastet, sodass sie jeweils einer Sensoraußenfläche 105 durch die kreisscheibenförmige Aussparung 102 von außen für die entsprechende Abtastung zugänglich sind. Anschließend wird eine Leiterbahn 106 mit einem Steckverbinder 107 auf einen entsprechenden Steckverbinder 108 des Sensors 104 aufgesteckt und anschließend die Leiterbahn 106, die so viele Steckverbinder 107 wie PDC-Sensoren 104 hat, mit einem weiteren Steckverbinder (nicht gezeigt) an einen Teil - kabelbaum des Fahrzeugs angesteckt.

Die bislang übliche Montage von PDC-Sensoren untergliederte sich in die folgenden sechs Schritte:
1. Teilkabelbaum des PDC-Systems auf dem Stoßfängerträger befestigen, z.B. mit Clipsen (Zusatzbauteil= hoher Aufwand).
2. den PDC-Halter auf der Stoßfängerverkleidung/Stoßleiste befestigen.
3. den PDC-Sensor in den PDC-Halter einstecken,
4. Teilkabelbaum mit Stecker durch Stoßfängerverlcleidung/Stoßleiste fädeln und Steckverbindung an den vier Sensoren herstellen,
5. Steckverbindung zwischen dem Teilkabelbaum der PDC und dem Teilkabelbaum des Kraftfahrzeugs herstellen, wenn die Trennung vorgesehen ist.
6. Befestigung der Stoßfängerverkleidung/Stoßleiste am Fahrzeug.

Eine derartige Anordnung hat sich im Prinzip bewährt, besitzt jedoch einen relativ hohen Montageaufwand, wobei die Montage üblicherweise am Hauptmontageband stattfindet.

Aus der DE 102 03 387 A1 (Oberbegriff von Anspruch 1) ist eine PDC-Sensoranordnung für ein Fahrzeug bekannt, die sich aus einem Sensorgehäuse und einer Kappe zusammensetzt. Sensorgehäuse und Kappe sind über eine Plattenfeder miteinander verbunden. Der in einen Aufnahmeraum des Sensorgehäuses eingesetzte Sensor ist über einen Leitungsdraht mit einer Leiterplatte verbunden, die mit Verbindungsklemmen in der Kappe verlötet wird. Die Verbindungsklemmen werden mittels Steckkontakten zur elektrischen Verbindung mit dem Fahrzeug nach außen geführt. Die Steckkontakte einer jeden PDC-Sensoranordnung werden, wie oben stehend erläutert, in einem eigenen Arbeitsgang mit dem elektrischen System des Fahrzeugs verbunden, woraus sich der oben erwähnte, vergleichsweise hohe Montageaufwand ergibt.

Aufgabe der Erfindung ist es, die Montage von PDC-Sensoren zu vereinfachen und eine Ausgliederung in Vormontageumfänge zu ermöglichen.

Die Aufgabe wird mit einer Sensoranordnung einer Einparkhilfe an Fahrzeugteilen mit den Merkmalen des Anspruchs 1 gelöst.

Vorteilhafte Weiterbildungen sind in Unteransprüchen gekennzeichnet.

Die Erfindung sieht vor, den Halter eines PDC-Sensors so auszubilden, dass der PDC-Sensor lediglich in den Halter gesteckt werden muss, um ihn dort zu verrasten und ihn dort gleichzeitig elektrisch zu kontaktieren. Hierdurch ergibt sich eine wesentliche Vereinfachung, da mit dem Einstecken des Sensors in den Halter gleichzeitig dessen Kontaktierung mit dem fahrzeugseitigen Kabelbaum oder einem Teil desselben oder eines eigenen PDC-Kabelbaums erfolgt. Die Erfindung sieht ferner vor, als Leiterbahnen Meterware zu verwenden, die vereinfacht in den Kontaktbereichen elektrisch leitend angebunden werden können. Gegenüber einer herkömmlichen sechsstufigen Montage am Hauptband kann der Montageablauf nach der Erfindung wie folgt erfolgen:
1. PDC-Halter auf Stoßfängerverkleidung/Stoßleiste befestigen (automatisierbarer Vorgang beispielsweise bei Verklebung),
2. PDC-Sensor in PDC-Halter einstecken,
3. Steckverbindung zwischen Kabelbaum der PDC-Sensoren und Teilkabelbaum des Fahrzeugs herstellen,
4. Befestigung der Stoßfängerverkleidung/Stoßleiste am Fahrzeug.

Die ersten beiden Montageschritte lassen sich in einfacher Weise auch beim Zulieferer durchführen, sodass die Hauptmontage am Hauptmontageband weiter verkürzt und vereinfacht wird. Des weiteren wird durch diese Maßnahme eine Vorprüfbarkeit des Zusammenbaus schon beim Zulieferer ermöglicht.

Durch die selbsttätig mit dem Einstecken des Sensors in den Halter erfolgende Kontaktierung wird einerseits die elektrische Stromversorgung des Sensors gewährleistet. Außerdem werden die Signalleitungen des Sensors mit dem Kabelbaum des Fahrzeugs bzw. einem Teilkabelbaum an der Stoßfängerverkleidung/Stoßleiste elektrisch verbunden.

Die Erfindung wird anhand einer Zeichnung beispielhaft erläutert, es zeigen dabei:
- Fig. 1: eine Ausführungsform einer erfindungsgemäßen Anordnung eines PDC-Sensors in einer geschnittenen Explosionsansicht;
- Fig. 2: eine weitere Ausführungsform der erfindungsgemäßen Anordnung eines PDC-Sensors mit einem von der Stoßfängerseite her einzuschiebenden Sensor;
- Fig. 3a bis 3e: eine Ausführungsform der Anordnung nach Fig. 2;
- Fig. 4: schematisch die Anordnung einer elektrischen Leitung an einen PDC-Halter, wobei die elektrische Leitung den PDC-Halter entlang einer Seite, unterhalb einer Steckverbindereinrichtung, durchgreift;
- Fig. 5: eine weitere Ausführungsform der Anordnung einer elektrischen Leitung an dem PDC-Halter, wobei die elektrische Leitung den PDC-Halter mittig durchgreift;
- Fig. 6: eine weitere Ausführungsform der Anordnung einer elektrischen Leitung an einem PDC-Halter, wobei die elektrische Leitung ein Folienleiter ist;
- Fig. 7: schematisch eine weitere Ausführungsform der Anordnung einer elektrischen Leitung an einem PDC-Halter, wobei der Abgriff über einen Gabelkontakt erfolgt;
- Fig. 8: eine weitere Ausführungsform der Anordnung eines PDC-Sensors in einem PDC-Halter in montiertem Zustand;
- Fig.9: eine vergrößerte Darstellung eines auf einen Flachleiter aufgesetzten Stanzgitters;
- Fig. 10: eine schematische Schnittdarstellung eines Sensors mit umlaufenden Dichtungen;
- Fig. 11 1: eine schematische Darstellung eines Herstellungswerkzeuges, mit einer eingelegten Leiterbahn und Gabelkontakten;
- Fig. 12 und 13: zwei Ausführungsbeispiele von Aufnahmen für Leiterbahnen an einer Stoßfängereinlage;
- Fig. 14: eine Darstellung eines Flachleiters mit Faltstellen;
- Fig. 15: eine perspektivische Ansicht des Inneren einer Stoßfängerverkleidung, mit einem Flachleiter mit einem Stecker sowie einer Steckeraufnahme und
- Fig. 16: eine Anordnung nach dem Stand der Technik.

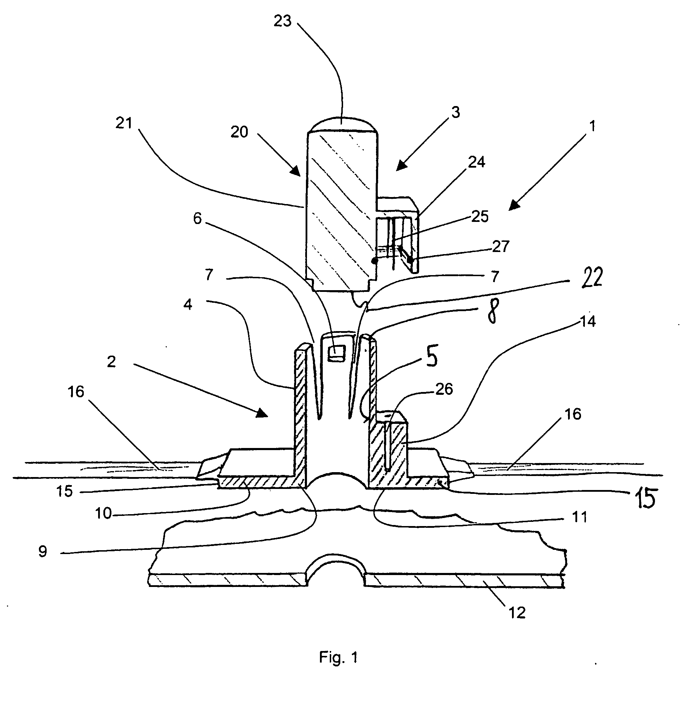

Eine erfindungsgemäße Sensoranordnung 1 einer Einparkhilfe (PDC = Park Distance Control) an Fahrzeugteilen (Fig. 1) umfasst einen PDC-Halter 2 und einen PDC-Sensor 3. Der PDC-Halter 2 besitzt eine hohlzylindrische Aufnahmebuchse 4 zur Aufnahme des PDC-Sensors 3. Die hohlzylindrische Buchse 4 besitzt eine Zylindermantelwandung 5. In der Zylindermantelwandung 5 sind erste Rastmittel 6 vorhanden. Beidseitig der Rastmittel 6 ist die Zylindermantelwandung 5 mit Federschlitzen 7 ausgebildet, welche sich axial von einer Stirnseite 8 der Mantelwandung 5 in die Buchse 4 hinein erstrecken. Durch diese Rastmittel kann die Montage und Demontage des Sensors 3 in einfacher und schneller Weise erfolgen, wobei gleichzeitig eine sichere Festlegung des Sensors 3 im Halter 2 gewährleistet ist. Im Bereich einer gegenüberliegenden Stirnwandung 9 besitzt der PDC-Halter 2 einen Befestigungsflansch 10, der sich radial von der Stirnfläche 9 nach außen erstreckt. Der Befestigungsflansch 10 kann quadratisch, rechteckig oder sich von der Buchse 4 radial nach außen erstreckend kreisrund ausgebildet sein. Der Befestigungsflansch 10 besitzt eine Auflagefläche 11, mit der er auf einer Stoßfängerverkleidung oder einer Stoßleiste 12 aufsitzt. Die Befestigung des Halters 2 kann auf vielfältige Weise erfolgen, z. B. durch Verklebung, Ultraschallschweißen, Laserschweißen, Reibschweißen oder durch eine formschlüssige (Klips-)Verbindung.

Auf einer gegenüberliegenden Fläche besitzt der Befestigungsflansch 10 eine Steckverbindereinrichtung 14, welche beispielsweise kastenartig ausgebildet ist und sich von dem Befestigungsflansch 10 bzw. seiner Fläche 13 entlang der Zylindermantelwandung 5 weg erstreckt. Von einer Stirnseite 15 des Befestigungsflansches 10 zu einer gegenüberliegenden Stirnseite 15 des Befestigungsflansches 10 durchquert eine elektrische Leitung 16 den Befestigungsflansch 10, wobei geeignete Mittel vorhanden sind, welche entsprechende Leiterbahnen (nicht gezeigt) mit der Steckverbindereinrichtung 14 kontaktieren. Die elektrische Leitung 16 und der Halter 2 sind durch geeignete Maßnahmen einstückig und entsprechend der Vorgabe elektrisch leitend verbunden. Geeignete Maßnahmen sind z. B. das Einspritzen, Vergießen oder Aufsetzen und Verrasten eines Deckels jeweils nach der Herstellung der Kontaktierung.

Der PDC-Sensor 3 besitzt ein zylindrisches Gehäuse 20 mit einer Zylindermantelwandung 21 und einer Stirnfläche 22 sowie einer gegenüberliegenden Stirnfläche 23. Die Stirnfläche 22 ist eine Sensorfläche 22, welche in montiertem Zustand zur Fahrzeugaußenseite zur Aufnahme von Signalen gerichtet ist. Die Farbgebung der Sensorfläche 22 entsprechend der Farbe der Stoßfängerverkleidung 12 oder einer Stoßleiste 12 kann durch spezielle Drucktechniken (z. B. Tampoprint, Offsetdruck, Siebdruck) oder Aufbringen einer Farbfolie erfolgen. Hierdurch wird im Vergleich zu einem Lackierverfahren eine Vereinfachung und eine Verringerung des Ausschusses durch fehlerhafte Lackierung (Lackdicke, Lacknasen) erreicht.

Die Stirnfläche 23 ist glattflächig ausgeführt und bietet dadurch eine geeignete Ansatzfläche für das manuelle Einsetzen (beispielsweise mit dem Daumen) des Sensors 3. Außerdem ist es vorteilhaft, die Länge der Buchse 4 und des Sensors 3 so aufeinander abzustimmen, dass bei in den Halter 2 eingesetztem Sensor 3 die Stirnfläche 23 und die Stirnseite 8 der Mantelwandung 5 der Buchse 4 miteinander fluchten. Hierdurch ist eine optische und haptische Rückmeldung über die vollständige Verrastung des Sensors 3 im Halter 2 gegeben.

An der Zylindermantelwandung 21 ist eine Steckverbindereinrichtung 24 angeordnet, welche zu der Steckverbindereinrichtung 14 des PDC-Halters 2 korrespondierend ausgebildet ist. Somit kann die Steckverbindereinrichtung 14 des Halters 2 männlich und die Steckverbindereinrichtung 24 des PDC-Sensors 3 weiblich oder umgekehrt ausgebildet sein. Die aufnehmende Steckverbindereinrichtung, in diesem Fall die Steckverbindereinrichtung 24, besitzt vorstehende Steckkontakte 25, welche in entsprechende Aufnahmen 26 der Steckverbindereinrichtung 14 einsteckbar sind. Zudem ist eine umlaufende Dichtung 27 vorhanden, welche in montiertem Zustand die aufgenommene Steckverbindereinrichtung 24 derart umschließt, dass das Eindringen von Feuchtigkeit verhindert wird.

Zudem sind an dem Sensor 3 korrespondierend zu den Rastmitteln 6 zweite Rastmittel (nicht gezeigt) vorgesehen. Sind die Rastmittel 6 am PDC-Halter- wie in Fig. 1 dargestellt - Rastöffnungen, sind an entsprechender korrespondierender Stelle am Sensor 3 entsprechende Rastvorsprünge angeordnet oder umgekehrt.

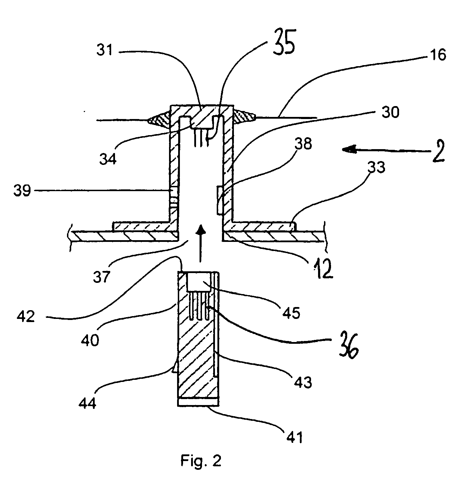

Bei einer weiteren Ausführungsform der Erfindung (Fig. 2) umfasst die Anordnung 1 einen Halter 2 und einen PDC-Sensor 3. Der Halter 2 ist hohlzylindrisch einseitig geschlossen mit einer Zylindermantelwandung 30 und einer Stirnwandung 31 ausgebildet. Gegenüberliegend der Stirnwandung ist an einer Stirnfläche des Halters 2 radial nach außen vorstehend ein Befestigungsflansch 33 angeordnet. Der Befestigungsflansch 33 und die Zylindermantelwandung 30 sind einstückig ausgebildet. Im Bereich der Stirnwandung 31 ist innenseitig des hohlzylindrischen Halters 2 eine Steckverbindereinrichtung 34 angeordnet. Die Steckverbindereinrichtung 34 kann männlich oder weiblich ausgebildet sein. Der Halter 2 wird im Bereich der Stirnwandung 31 von einer Seite der Zylindermantelwandung 30 zu einer diametral gegenüberliegenden Seite der Zylindermantelwandung 30 von einer elektrischen Leitung 16 durchquert, wobei geeignete Mittel vorhanden sind, welche entsprechende Leiterbahnen (nicht gezeigt) mit der Steckverbindereinrichtung 34 kontaktieren. Die elektrische Leitung 16 und der Halter 2 sind durch geeignete Maßnahmen einstückig und entsprechend der Vorgabe elektrisch leitend verbunden. Geeignete Maßnahmen sind z. B. das Einspritzen, Vergießen oder Aufsetzen und Verrasten eines stirnseitigen Deckels jeweils nach der Herstellung der Kontaktierung.

Die Anbindung der elektrischen Leitung 16 (Leiterbahn, Stanzgitter etc.) an den Halter 2 erfolgt beispielsweise im Mehr-Komponenten-Spritzgussverfahren, um bereichsweise unterschiedliche Elastizitäten im Halter 2 zu erzielen. Hierzu wird im Bereich der elektrischen Anschlüsse eine vergleichsweise weiche Komponente eingesetzt (zum Beispiel TPE), um eine sichere Abdichtung des elektrischen Kontaktbereichs zu erreichen. Die zweite Komponente ist beispielsweise ein Standardthermoplast, der eine ausreichende Festigkeit sowie die erforderlich "harte" Oberfläche des Halters 2 erzeugt.

Mit dem Befestigungsflansch 33 ist der hohlzylindrische PDC-Halter 2 im Bereich einer kreisringförmigen Ausnehmung 37 in einer Stoßfängerverkleidung/Stoßleiste 12 angeordnet, wobei der Durchmesser der Öffnung 37 und der innere Durchmesser des hohlzylindrischen Halters 2 im Wesentlichen übereinstimmen und die Öffnung 37 und der Hohlzylinder axial fluchtend miteinander ausgerichtet sind. Innenseitig an der Zylindermantelwandung 30 ist eine Verdrehsicherungseinrichtung 38 in Form eines Vorsprungs 38 vorhanden. In der Zylindermantelwandung 30 ist zudem ein Rastmittel 39 in Form einer Rastausnehmung 39 vorhanden.

Der PDC-Sensor 3 besitzt ein länglich zylindrisches Gehäuse bzw. ist länglich zylindrisch ausgebildet mit einer Zylindermantelwandung 40, einer außenseitigen Sensorstirnseite 41 und einer Sensor-innenseitigen Stirnseite bzw. Wandung 42.

Im Bereich der Mantelwandung 40 besitzt der PDC-Sensor 3 eine Verdrehsicherungseinrichtung 43, insbesondere eine zu dem Vorsprung 38 korrespondierende Verdrehsicherungsnut 43. Der Durchmesser des Sensors 3 ist vorzugsweise so bemessen, dass er dem Innendurchmesser des Halters 2 und der Öffnung 37 entspricht oder geringfügig kleiner ist. Die axiale Länge des Sensors 3 ist so bemessen, dass er zwischen den Stirnflächen 41, 42 einer einsteckbaren Länge in den Halter 2 entspricht, wobei eine Außenfläche 41 des Sensors 3 vorzugsweise mit einer Außenfläche der Stoßfängerverkleidung 12 bzw. Stoßleiste 12 abschließt oder geringfügig zurücksteht. Im Bereich der Mantelwandung 40 ist zudem eine Rasteinrichtung 44 vorhanden. Die Rasteinrichtung 44 ist beispielsweise eine Rastnase 44, welche in die Rastausnehmung 39 des Halters eingreift. Im Bereich der Stirnseiten 42 besitzt der Sensor 3 eine Steckverbindereinrichtung 45, welche mit der Steckverbindereinrichtung 34 korrespondiert. Die Steckverbindereinrichtung 45 ist somit entsprechend weiblich oder männlich ausgebildet. Im dargestellten Ausführungsbeispiel sind an der Steckverbindereinrichtung 34 vorstehende Steckkontakte 35 vorgesehen, welche in entsprechende Aufnahmen 36 der Steckverbindereinrichtung 45 einsteckbar sind.

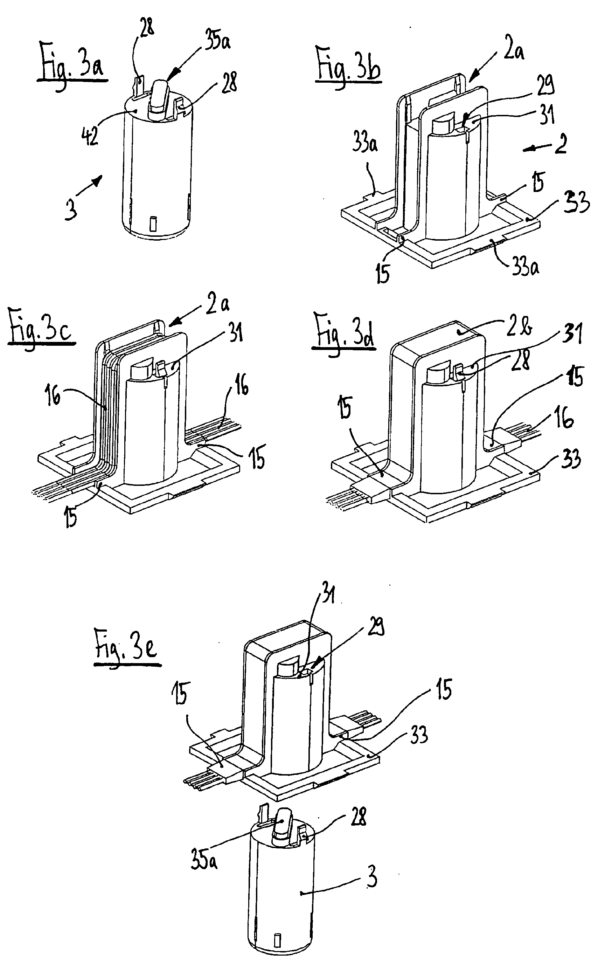

Während beim Ausführungsbeispiel nach Fig. 1 der Sensor von der Rückseite des Halters 3 in diesen eingesetzt wird, erfolgt bei den Ausführungsbeispielen nach den Fig. 2 und 3a bis 3e das Einsetzen des Sensors 3 in entgegengesetzter Richtung, indem der Sensor 2 von der Vorderseite des Halters 2 (der Stoßfängerverkleidung oder der Stoßleiste zugewandt) in diesen eingesetzt wird.

Um den Flach- oder Folienleiter 16 nicht beabstandet zu Stoßfängerverkleidungen bzw. Stoßleisten führen zu müssen, ist es bei der Ausführungsform gemäß den Fig. 3a bis 3e vorteilhaft, den Flach- oder Folienleiter 16 im Bereich des Flansches 33 am Halter anzuordnen. Hierbei trifft der Flach- oder Folienleiter 16 im Bereich einer ersten Kante 15 des Flansches 33 auf den Flansch 33 und wird von hier über den zylindrischen Teil des Halters 2 geführt, wobei im Bereich der Stirnwandung 31 die Kontaktierung erfolgt und an der gegenüberliegenden Fläche zu einer der ersten Kante 15 des Flansches diametral gegenüberliegenden Kante 15 des Flansches 10 geführt. Der Flach- oder Folienleiter 16 kann hierbei auf seinem gesamten Weg entlang des Halters 2 mit diesem in bereits beschriebener Weise einstückig ausgebildet, dass heißt vergossen oder eingespritzt sein. Durch diese Anordnung ist es in einfacher Weise möglich, den Flach- oder Folienleiter 16 entlang der Stoßfängerverkleidungsinnenseite zu führen.

Die Fig. 3a und 3b zeigen den Sensor 3 bzw. den Halter 2, vor dem Zusammensetzen. Wie aus Fig. 3c hervorgeht, wird in einem ersten Herstellschritt die Leiterbahn 16 in einer kanalartigen Aufnahme 2a an der Außenseite des Halters 2 entlanggeführt und anschließend gemäß Fig. 3d mit einem Hotmelt 2b vergossen. Im letzten Herstellschritt gemäß Fig. 3e wird nun der Sensor 3 in den zylindrischen Innenraum des Halters 2 eingeführt. Rastnasen 28 an der Stirnfläche 42 des Sensors 3 rasten hierbei in entsprechende Rastöffnungen 29 an der Stirnwandung 31 des Halters 2 ein (siehe auch Fig. 3c und 3d, mit in den Öffnungen 29 verrasteten Rastnasen 28). Mit dem Verrasten erfolgt gleichzeitig die Kontaktierung in dem nur schematisch dargestellten Kontaktbereich 35a. Der Halter 2 wird anschließend über den Flansch 33, an dem sich Rastvorsprünge 33a befinden, mir der Stoßfängerverkleidung oder der Stoßleiste verklipst.

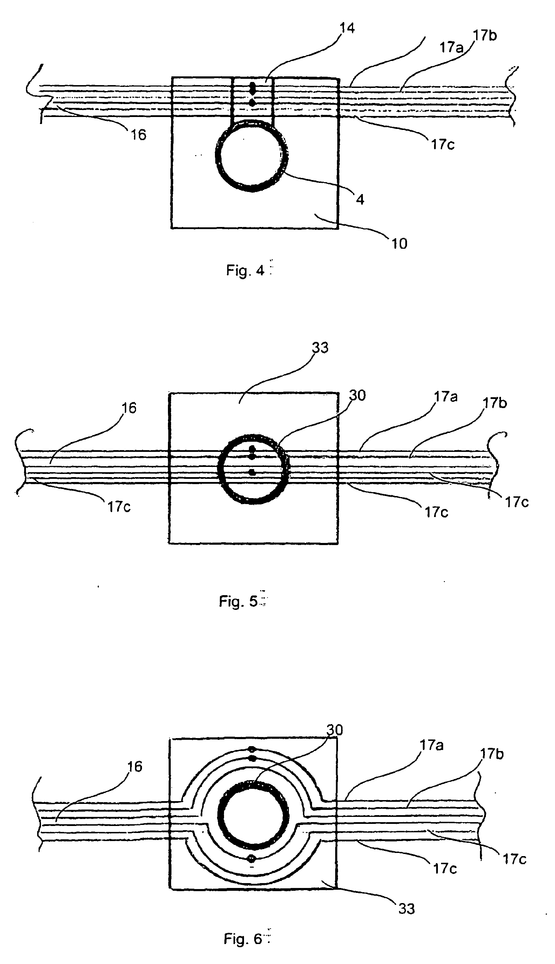

Die erfindungsgemäße Anordnung sieht vor, dass eine elektrische Leitung 16, vorzugsweise ein Flach- oder Folienleiter 16, mit einer Mehrzahl von Leiterbahnen 17a bis 17c (Fig. 4 - 6), die Halter 2 nacheinander, entsprechend ihrer Abfolge in einer Stoßfängerverkleidung bzw. Stoßleiste durchgreift. Wie bereits ausgeführt sind die elektrische Leitung 16 und jeder Halter 2 durch geeignete Maßnahmen einstückig und entsprechend der Vorgabe elektrisch leitend verbunden. Geeignete Maßnahmen sind z. B. das Einspritzen, Vergießen oder Aufsetzen und Verrasten eines stirnseitigen Deckels jeweils nach der Herstellung der Kontaktierung

Eine elektrische Leitung 16 umfasst mehrere Leiterbahnen 17a bis 17c (Fig. 4-7). Hierbei sind eine Zuleitung 17a und eine Ableitung 17b vorhanden. Ferner umfasst die elektrische Leitung eine Mehrzahl von Signalleitungen 17c, wobei die Zahl der Signalleitungen 17c der Zahl der Sensoren 3 entspricht und jedem Sensor 3 eine Signalleitung 17c zugeordnet ist.

Bei einer Ausführungsform der Erfindung nach Fig. 1 (Fig. 4) kann die elektrische Leitung 16 den Halter 2 im Bereich der Steckverbindereinrichtung 14 durchgreifen, entlang einer Seite des Halters 2, wobei mittels geeigneter Kontaktierungsmittel, z. B. Schneid-Klemmkontakten oder Gabelkontakten, die jeweils notwendigen bzw. gewünschten Leiterbahnen 17a, 17b, und 17c kontaktiert werden.

Bei einer Ausführungsform nach den Fig. 2, 3 und 5 durchgreift die elektrische Leitung 16 den Halter 2 mittig im Bereich der Stirnfläche 31, wobei dort ebenfalls mittels geeigneter Kontaktierungsmittel, z. B. Schneid-Klemmkontakten oder Gabelkontakten, die jeweilig notwendigen Leiterbahnen 17a, 17b, und 17c kontaktiert werden.

Bei Folienleitern kann die Kontaktierung über Durchstoßkontakte, Gabelkontakte oder Crimpkontakte erfolgen.

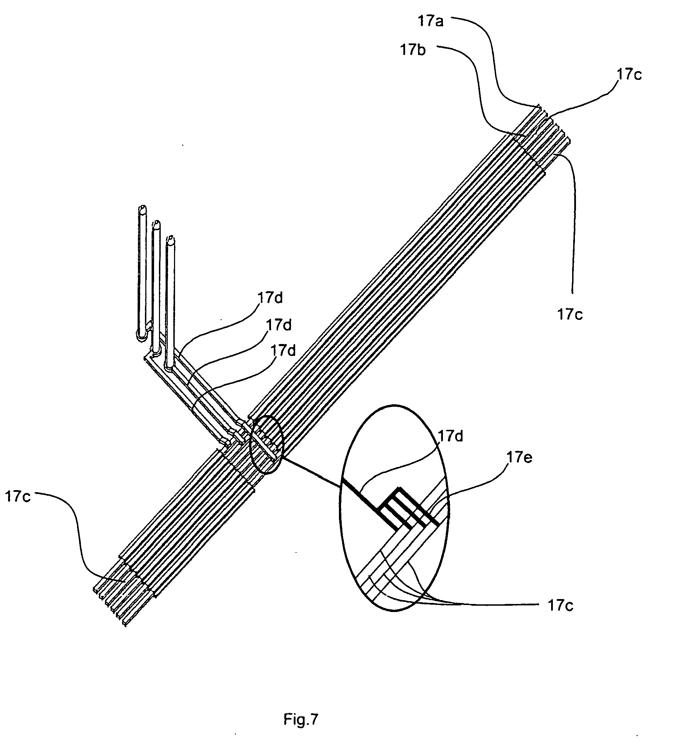

Die Ausführungsformen nach Fig. 4 und Fig. 5 werden insbesondere dann verwendet, wenn Flachleiter 16 in Form von Meterware verwendet werden. Bei diesen Ausführungsformen ist es bei Verwendung von Flachleitern 16 erforderlich, die Halter 2 entsprechend ihrer Abfolge an der Stoßfängerverkleidung bzw. Stoßleiste mit unterschiedlich positionierten Kontaktierungsmitteln für die Leiterbahnen 17c auszustatten, da jeweils eine andere Leiterbahn 17c kontaktiert werden muss. Hierfür sind auch sogenannte Gabelkontakte 17 d (Fig. 7) geeignet, bei denen die Kontaktierung der Steckverbinderkontakte in immer gleicher Weise erfolgt, jedoch im Bereich des Abgriffs an den Leiterbahnen 17c, entsprechend der Stanzgittertechnik, nicht benötigte Kontaktierungspfade 17e entfernt werden. Unter Stanzgitter ist in Zusammenhang mit der vorliegenden Erfindung ein Gabelkontakt zu verstehen, der im Stanzverfahren aus einem Blech hergestellt wird.

Bei einer weiteren Ausführungsform nach Fig. 1 (Fig. 6) durchgreift ein Folienleiter 16 den Halter 2 im Bereich des Befestigungsflansches 10, wobei hierbei die Konta k-tierungsmittel im Bereich des Flansches 10 verteilt angeordnet sind und geeignet zu der Steckverbindereinrichtung geführt werden. Bei diesen Ausführungsformen kann der Halter 2 hierfür über ein dreidimensionales Leitungsgitter beispielsweise in Stanzgittertechnik verfügen, welches direkt im Herstellungsprozess des PDC-Halters eingebracht wird. Auch bei dieser Ausführungsform können Gabelkontakte 17d in gleicher Weise wie zuvor beschrieben verwendet werden. Ferner ist es möglich, Leiterbahnen durch Beschichtungsverfahren aufzubringen. Hierdurch kann die Zahl der Montageschritte erheblich reduziert werden. Hierdurch wird ebenfalls für jede Position an der Stoßfängerverkleidung/Stoßleiste 12 ein vorkonfektionierter Halter 2 verwendet.

Bei der Verwendung von Folienleitern 16 ist es möglich, im dem Bereich, in dem der Folienleiter 16 die Kontakte des jeweiligen Halters 2 kontaktieren soll, ein Stanzgitter (nicht gezeigt) vorzusehen, bei dem die Leiterbahnen 17 von einer gleichen Anzahl von zueinander beabstandeten Leiterbahnen die hierzu in einem Winkel von 90° quer verlaufen kontaktiert werden, so dass jede Leiterbahn 17c eine der querverlaufenden Leiterbahnen in einem Kreuzungspunkt kontaktiert. Durch die Stanzgittertechnik ist es möglich, im Bereich der Kontaktstelle durch Herausstanzen entsprechender Gitterteile, die unterschiedlichen Signalleitungen 17c immer an einer Kontaktstelle vorzusehen bzw. hierher zu verlegen. Hierbei ist von Vorteil, dass einheitliche Halter mit einheitlich angeordneten Kontakten hergestellt werden können und lediglich der Folienleiter auf die Anzahl der vorhandenen Halter 2 vorkonfektioniert werden muss. Da die Halter 2 aufeinanderfolgend angeordnet sind, stellt diese Konfektionierung keinerlei Problem dar, da lediglich dafür gesorgt werden muss, dass die Leiterbahnen 17c nacheinander von Kontaktbereich (Stanzgitter) zum nachfolgenden Kontaktbereich (Stanzgitter) durch entsprechendes Stanzen auf den jeweiligen Kontaktpunkt gelegt werden müssen.

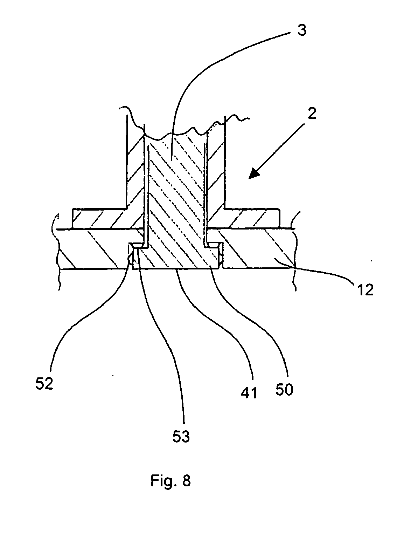

Bei einer weiteren Ausführungsform (Fig. 8) wird der Sensor 3 von der Außenseite der Stoßfängerverkleidung oder Stoßleiste 12 in den Halter 3 eingesetzt. Der PDC-Sensor 3 weist an seiner äußeren Stirnfläche 41 einen umlaufenden Ringflansch 50 auf, welcher in eine entsprechende Ringnut 51 der Stoßfängerverkleidung/Stoßleiste 12 eingepasst ist, wobei vorzugsweise die Fläche 41 mit der Au-ßenfläche der Stoßfängerverkleidung bündig abschließt. Um ein einheitliches Fugenbild zu gewährleisten, ist bei dieser Ausführungsform eine an dem Flansch 50 umlaufende Abstimmrippe 52 vorgesehen, welche den Fugenabstand exakt einstellt und die Fuge verschließt. Zudem kann eine Abstimmrippe 53 vorgesehen sein, welche am Nutboden 54 der Ringnut vorgesehen ist. Diese Rippe 53 kann insbesondere aus Kunststoff oder in Form einer Gummidichtung ausgeführt sein.

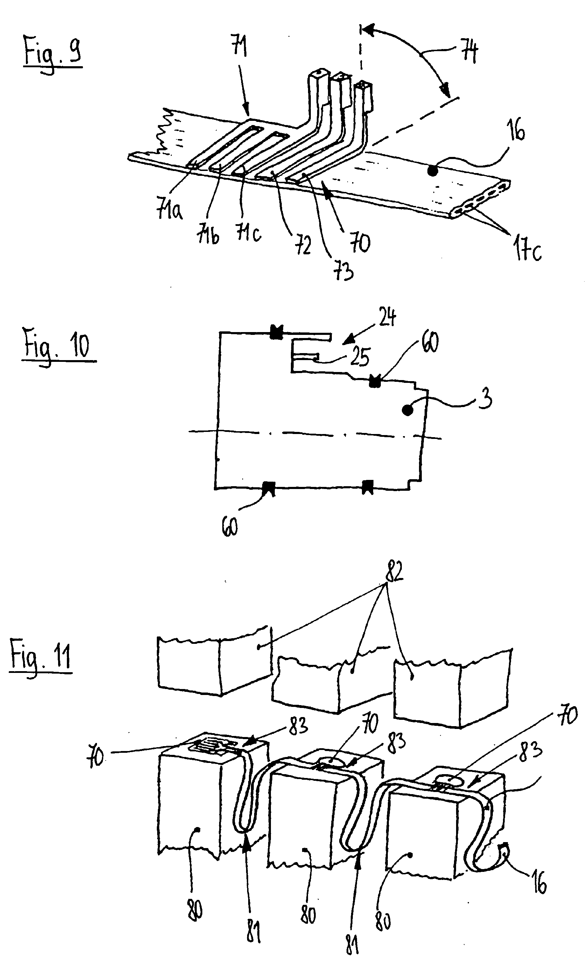

In Fig. 9 sind elektrische Kontaktzungen 71, 72 und 73 zur Bildung eines Stanzgitters 70 dargestellt, die über die Stanztechnik mit den einzelnen Leitern 17c eines Flachleiters 16 verbunden werden können. Hierbei gabelt sich die Kontaktzunge 71 in drei Einzelzungen 71a, 71b und 71c auf. Das Stanzgitter 70 kann als einheitliches Bauteil ausgeführt werden, wobei durch Biegen gemäß dem Pfeil 74 verschiedene Varianten gebildet werden können, die unter unterschiedlichen Winkeln zum Flachleiter 16 verlaufen.

Während in Fig. 1 eine umlaufende Dichtung 27 innerhalb des Gehäuses der Steckverbindereinrichtung 24 dargestellt ist, sind gemäß Fig. 10 an der Außenseite des Sensors 3 (oder gleichwirkend an der inneren Mantelfläche 5 des Halters 2) radiale Dichtringe 60 vorgesehen, die den Bereich der Steckverbindereinrichtung 24 sowie den Aufnahmebereich des Sensors 3 gegen das Eindringen von Partikeln und Feuchtigkeit abdichten. Durch diese Ausgestaltung erübrigen sich aufwändige Abdichtungsmaßnahmen, insbesondere gegen das Eindringen von Wasser in den Bereich der Steckverbindereinrichtung 24.

Die Herstellung der Halter 2 kann beispielsweise gemäß Fig. 11 erfolgen, indem in einem einzigen Zyklus alle Halter 2 gebildet werden. Hierzu wird die Leiterbahn 16 in ein nicht näher dargestellten Werkzeug mit mehreren Kavitäten 80 eingelegt, wobei die Leiterbahn 16 zwischen den Kavitäten 80 "durchhängen" kann (Abschnitte 81). Nach dem Schließen des Werkzeuges durch die Oberteile 82 werden diejenigen Abschnitte 83 der Leiterbahn 16, die mit den Haltern 2 in elektrischen Kontakt gebracht werden, zusammen mit den eingebrachten Stanzgittern 70 umspritzt. Durch die gleichzeitige Herstellung mehrerer Halter 2 kann die Zykluszeit deutlich gesenkt werden.

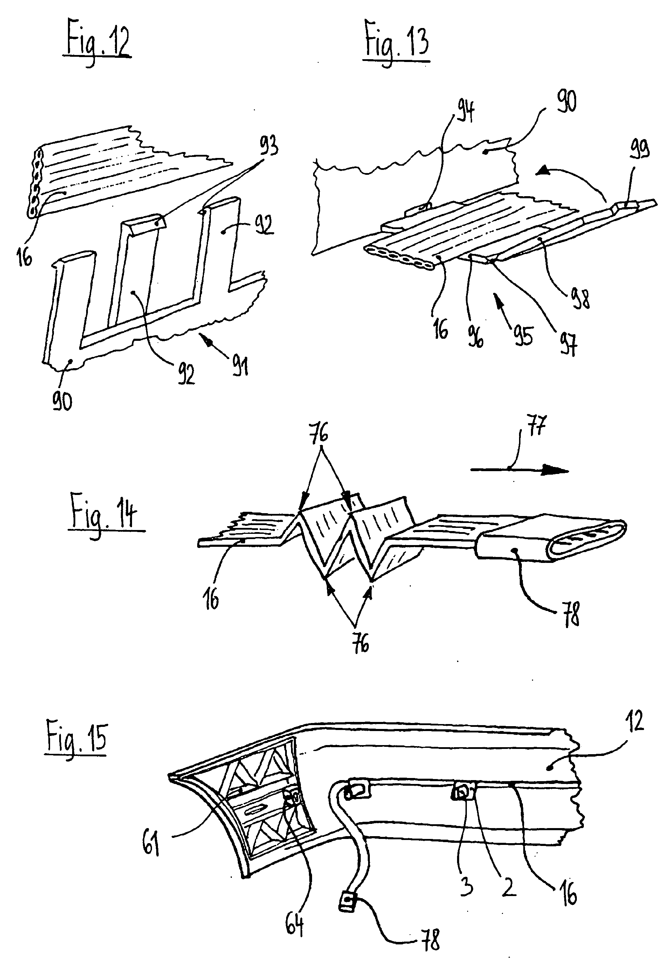

Die als Flachleiter 16 ausgebildete Leiterbahn kann gemäß den Fig. 12 und 13 an der Innenseite der Stoßfängerverkleidung 12 befestigt werden. Wie Fig. 12 zeigt, ist an einer innenseitigen Einlage 90 der Stoßfängerverkleidung 12 eine Halterung 91 für den Flachleiter 16 vorgesehen, die aus einer Mehrzahl gegeneinander versetzter Laschen 92 mit abwechselnd entgegengesetzt gerichteten Vorsprüngen 93 besteht. Fig. 13 zeigt eine andere Ausführungsform einer Halterung 95, die aus einer an der Einlage 90 der Stoßfängerverkleidung 12 befestigten Aufnahme 96 sowie einem über ein Filmscharnier 97 angelenkten Deckel 98 besteht, dessen Nase 99 in einer Aussparung 94 verrasten kann. Der Flachleiter 16 kann in besonders einfacher Weise zwischen Aufnahme 96 und Deckel 98 geklemmt werden.

Wie aus Fig. 14 hervorgeht, kann der Flachleiter 16 so vorbereitet sein, dass er gezielt gefaltet werden kann, um den Flachleiter 16 flexibel verlegen zu können, beispielsweise entlang von Rundungen oder um unterschiedliche Abstände zwischen den Haltern 2 auszugleichen. Denkbar ist hier beispielsweise die Anpassung an unterschiedliche Höhenlagen der einzelnen Sensoren 3. Des weiteren kann durch die Auch kann durch die Faltung an den Faltstellen 76 eine Zugentlastung eines Steckers 78 in Richtung des Pfeils 77 erreicht werden. Der Stecker 78 ist an einem freien Endabschnitt der Leitung 16 angeordnet, auf der bevorzugt eine Mehrzahl von Haltern 2 für die Sensoren 3 "aufgereiht" ist.

Fig. 15 zeigt eine hintere Stoßfängerverkleidung 12 mit einer versteifenden Stoßfängereinlage 61 im seitlich herumgezogenen Bereich 62. Wie oben beschrieben, ist eine Mehrzahl von Haltern 2 an der Stoßfängerverkleidung 12 angebracht. Der Flachleiter 16, der die einzelnen Halter 2 miteinander verbindet, endet in einem Stecker 78, der nach der Montage der Stoßfängerverkleidung 12 an das Fahrzeug mit dem Kabelbaum des Fahrzeugs verbunden wird. Zur Vermeidung von Verschmutzungen und Beschädigungen des freien Endabschnittes 63 des Flachleiters 16 und des Steckers 78 während des Transports und der Montage der Stoßfängerverkleidung 12 ist eine Aufnahme 64 an der Stoßfängereinlage 61 vorgesehen, die den Stecker 78 aufnimmt.

Bei der Erfindung ist von Vorteil, dass sich PDC-Sensoren bei der Montage sehr leicht und schnell montieren lassen, wobei durch das Vorsehen von separaten Ve r-drehsicherungen oder der lagerspezifischen Vorsehung von Steckverbindereinrichtungen als Verdrehsicherung oder der räumlichen Ausbildung der Steckverbindereinrichtung derart als Verdrehsicherung dient, eine Fehlsteckung ausgeschlossen werden kann. Durch die Verwendung von Flachleitern als Meterware ist die Anordnung zudem preisgünstig zu realisieren, wobei beim Vorsehen von Flachleitern und die hierdurch mögliche Verwendung immer der geometrisch gleichen Kontaktierungspunkte keine Variantenerzeugung in den Haltern notwendig ist. Hierdurch werden in erheblichem Maß Zeit und Kosten gespart.

Da die Folien- oder Flachleiter vorkonfektioniert sind, müssen keine getrennten Anschlussschritte mehr durchgeführt werden.

Durch die Erfindung können einheitliche Sensoren für alle Fahrzeugbaureihen eines Herstellers eingesetzt werden. Darüber hinaus kann auch Hersteller übergreifend eine Vereinheitlichung stattfinden. Durch die einheitlichen Schnittstellen zur Peripherie und den Entfall von Varianten ergeben sich Kosteneinsparungen.

Die Erfindung betrifft eine Sensoranordnung einer Einparkhilfe, wobei ein Halter 2 und ein Sensor 3 vorhanden sind und der Halter 2 zur Aufnahme des Sensors 3 ausgebildet ist, wobei am Halter 2 und am Sensor 3 korrespondierende Rasteinrichtungen vorhanden sind zum verrasteten Festlegen des Sensors 3 im Halter 2 in einer Endmontageposition, wobei am Halter 2 und am Sensor 3 in zusammengebautem Zustand miteinander korrespondierende Steckverbindungseinrichtungen 14 und 24 bzw. 34 und 45 vorhanden sind, wobei der Halter 2 über eine Stromversorgung in Form der elektrischen Leitungen 16 verfügt, so dass im eingebauten Zustand des Sensors 3 über die versteckten Steckverbindereinrichtungen 14 und 24 bzw. 34 und 45 eine elektrische Stromversorgung des Sensors 3 gewährleistet ist.

## Patentansprüche

1. Sensoranordnung einer Einparkhilfe für eine Stoßfängerverkleidung bzw. für eine Stoßleiste eines Fahrzeugs, mit einer Mehrzahl von Haltern (2), die jeweils zur Aufnahme eines Sensors (3) ausgebildet sind, wobei am Halter (2) und am Sensor (3) korrespondierende Steckverbindungseinrichtungen (14, 24; 34, 45) vorhanden sind zum verrasteten Festlegen des Sensors (3) im Halter (2),
**dadurch gekennzeichnet, dass**
am Halter (2) eine, elektrische Leitung (16) vorgesehen ist, Halter (2) und die elektrische Leitung (16) einstückig ausgeführt und fest verbunden sind und die elektrische Leitung (16) die Mehrzahl von Haltern (2) nacheinander, entsprechend ihrer Abfolge in der Stoßfängerverkleidung bzw. Stoßleisie, miteinander verbindet.

2. Anordnung nach Anspruch 1,
**dadurch gekennzeichnet, dass**
der Halter (2) und die elektrische Leitung (16) zumindest in dem Bereich, in dem Leiterbahnen (17a bis 17c) der elektrischen Leitung (16) den Halter (2) bzw. die Steckverbindereinrichtung (14, 34) des Halters (2) elektrisch kontaktieren, mit dem Halter (2) eingespritzt, vergossen oder mit einem aufgesetzten und verrasteten und/oder verklebten Deckel fest verbunden ist.

3. Anordnung nach Anspruch 1 oder 2,
**dadurch gekennzeichnet, dass**
durch die versteckten Steckverbindungseinrichtungen (14, 24; 34, 45) im eingebauten Zustand des Sensors (3) eine elektrische Stromversorgung des Sensors gewährleistet ist.

4. Anordnung nach einem der vorgenannten Ansprüche,
**dadurch gekennzeichnet, dass**
die elektrischen Leitungen (16) Flach- oder Folienleiter (16) sind, welche mit der Steckverbindereinrichtung (14, 34) des Halters (2) elektrisch leitend kontaktiert sind.

5. Anordnung nach einem der vorgenannten Ansprüche,
**dadurch gekennzeichnet, dass**
die Kontaktierung bei Flachleitern über Schneid-Klemmkontakte oder Gabelkontakte (17d) erfolgt und bei Folienleitern über Durchstoßkontakte, Gabelkontakte (17d) oder Crimpkontakte erfolgt.

6. Anordnung nach einem oder mehreren der vorhergehenden Ansprüche,
**dadurch gekennzeichnet, dass**
am Halter (2) erste Rastmittel (6, 39) und am Sensor (3) zweite Rastmittel (44) vorhanden sind, welche bei vollständig in den Halter (2) eingestecktem Sensor (3) miteinander verrastend und den Sensor (3) im Halter (3) festlegend zusammenwirken.

7. Anordnung nach einem oder mehreren der vorhergehenden Ansprüche,
**dadurch gekennzeichnet, dass**
am Halter (2) und am Sensor (3) je eine Verdrehsicherungseinrichtung (38, 43; 14, 24; 34, 45) vorhanden ist, welche beim Einstecken des Sensors (3) in den Halter (2) und/oder in eingestecktem Zustand zusammenwirken.

8. Anordnung nach einem oder mehreren der vorhergehenden Ansprüche,
**dadurch gekennzeichnet, dass**
die Steckverbindungseinrichtungen (14, 24; 34, 45) die Verdrehsicherung sind.

9. Anordnung nach einem oder mehreren der vorhergehenden Ansprüche,
**dadurch gekennzeichnet, dass**
die elektrische Leitung (16) den Halter (2) im Bereich einer seitlich an einer Aufnahmebuchse (4) für den Sensor (3) angeordneten Steckverbindereinrichtung (14) durchgreift, wobei mittels geeigneter Kontaktierungsmittel die jeweils notwendigen bzw. gewünschten Leiterbahnen (17a, 17b, und 17c) kontaktiert werden, oder die elektrische Leitung (16) den Halter (2) im Bereich einer Stirnfläche (31) des Halters (2) durchgreift, wobei dort mittels geeigneter Kontaktierungsmittel, die jeweilig notwendigen Leiterbahnen (17a, 17b, und 17c) kontaktiert werden, oder die elektrische Leitung (16) den Halter (2) im Bereich des Befestigungsflansches (10) durchgreift, wobei hierbei die Kontaktierungsmittel im Bereich des Flansches (10) verteilt angeordnet sind und geeignet zu der Steckverbindereinrichtung (14, 34) geführt werden

10. Anordnung nach einem oder mehreren der vorhergehenden Ansprüche,
**dadurch gekennzeichnet, dass**
bei Verwendung von Flachleitern (16) die Halter (2) entsprechend ihrer Abfolge an der Stoßfängerverkleidungen bzw. Stoßleisten (12) mit unterschiedlich positionierten Kontaktierungsmitteln für die Leiterbahnen (17c) ausgestattet sind, da jeweils eine andere Leiterbahn (17c) kontaktiert werden muss, wobei die Kontaktierung über Gabelkontakte (17d) erfolgt, bei denen die Kontaktierung der Steckverbinderkontakte in immer gleicher Weise erfolgt und im Bereich des Abgriffs an den Leiterbahnen (17c) nicht benötigte Kontaktierungspfade (17e) entfernt sind.

11. Anordnung nach einem oder mehreren der vorhergehenden Ansprüche,
**dadurch gekennzeichnet, dass**
bei Folienleitern (16) in dem Bereich, in dem der Folienleiter (16) die Kontakte des jeweiligen Halters (2) kontaktieren soll, ein Stanzgitter vorgesehen ist, bei dem die Leiterbahnen (17a bis 17c) von einer gleichen Anzahl von zueinander beabstandeten Leiterbahnen die hierzu in einem Winkel von 90° quer verlaufen, kontaktiert werden, so dass jede Leiterbahn (17c) eine der querverlaufenden Leiterbahnen in einem Kreuzungspunkt kontaktiert, wobei im Bereich der Kontaktstelle durch Herausstanzen entsprechender Gitterteile die unterschiedlichen Signalleitungen (17c) immer an eine Kontaktstelle gelegt sind.

12. Anordnung nach einem oder mehreren der vorhergehenden Ansprüche,
**dadurch gekennzeichnet, dass**
bei Kontaktierung der elektrischen Leitung (16) im Bereich einer Stirnfläche (31) des Halters (2) der Flach- oder Folienleiter (16) im Bereich einer ersten Kante (15) des Flansches (10) auf den Flansch (10) und von hier über den zylindrischen Teil (30) des Halters (2) geführt ist, wobei im Bereich der Stirnwandung (31) die Kontaktierung erfolgt und von hier über den zylindrischen Teil (30) des Halters (2) wieder hinab und zu einer der ersten Kante (15) des Flansches (10) diametral gegenüberliegenden Kante (15) des Flansches (10) geführt ist.

13. Anordnung nach Anspruch 9,
**dadurch gekennzeichnet, dass**
der Flach oder Folienleiter (16) auf seinem gesamten Weg entlang des Halters (2) mit diesem einstückig ausgebildet und insbesondere vergossen oder eingespritzt ist.

14. Anordnung nach einem oder mehreren der vorhergehenden Ansprüche,
**dadurch gekennzeichnet, dass**
der Sensor (3) an seiner äußeren Stirnfläche (41) einen umlaufenden Ringflansch (50) besitzt, welcher in eine entsprechende Ringnut (51) der Stoßfängerverkleidung/Stoßleiste (12) eingepasst ist, wobei vorzugsweise eine Außenfläche (41) des Sensors (3) mit der Außenfläche der Stoßfängerverkleidung (12) bündig abschließt.

15. Anordnung nach einem der vorhergehenden Ansprüche,
**dadurch gekennzeichnet, dass**
an der Steckverbindereinrichtung (14, 24; 34, 45) vorstehende Steckkontakte (25; 35) vorgesehen sind, welche in entsprechende Aufnahmen (26; 36) der Steckverbindereinrichtung (14, 24; 34, 45) einsteckbar sind.

## Claims

1. A sensor arrangement in a parking aid for a bumper covering or bumper bar of a vehicle, comprising a number of holders (2), each adapted to receive a sensor (3), wherein mating plug-in connector devices (14, 24; 34, 45) are provided on the holder (2) and sensor (3) for locking and securing the sensor (3) in the holder (2),
**characterised in that**
an electric lead (16) is provided on the holder (2), the holder (2) and the electric lead (16) are in one piece and firmly connected, and the electric lead (16) and the majority of the holders (2) are connected to one another in succession, corresponding to their sequence in the bumper covering or bumper bar.

2. An arrangement according to claim 1,
**characterised in that**
the holder (2) and the electric lead (16), at least in the region in which strip conductors (17a to 17c) belonging to the electric lead (16) make electric contact with the holder (2) or the plug-in connector device (14, 34) thereof, is injection-moulded or encapsulated with the holder (2) or firmly connected thereto by a fitted-on, locked and/or stuck cover.

3. An arrangement according to claim 1 or claim 2,
**characterised in that**
the plug-in connector arrangements (14, 24; 34, 45), which are concealed when the sensor (3) is installed, supply electric current to the sensor.

4. An arrangement according to any of the preceding claims,
**characterised in that**
the electric leads (16) are flat or foil conductors (16) which are electrically contacted with the plug-in connector arrangement (14, 34) of the holder (2).

5. An arrangement according to any of the preceding claims,
**characterised in that**
contacting is via insulation-displacement contacts or tuning-fork contacts (17d) in the case of flat conductors and via push-through contacts, tuning-fork contacts (17d) or crimp contacts in the case of foil conductors.

6. An arrangement according to one or more of the preceding claims,
**characterised in that**
first locking means (6, 39) are provided on the holder (2) and second locking means (44) on the sensor (3) and lock together and in cooperation secure the sensor (3) in the holder (2) when the sensor (3) has been fully inserted into the holder (3).

7. An arrangement according to one or more of the preceding claims,
**characterised in that**
anti-twist devices (38, 43; 14, 24; 34, 35) are provided on the holder (2) and sensor (3) respectively and co-operate when the sensor (3) is inserted into the holder (2) and/or is in the inserted state.

8. An arrangement according to one or more of the preceding claims,
**characterised in that**
the plug-in connector devices (14, 24; 34, 45) are the anti-twist means.

9. An arrangement according to one or more of the preceding claims,
**characterised in that**
the electric lead (16) extends through the holder (2) in the neighbourhood of a plug-in connector device (14) disposed on a socket (4) for receiving the sensor (3), wherein the required or desired strip conductors (17a, 17b and 17c) are contacted via suitable contacting means or the electric lead (16) extends through the holder (2) in the region of an end face (31) of the holder (2) where the required strip conductors (17a, 17b and 17c) are contacted by suitable contacting means, or the electric lead (16) extends through the holder (2) in the region of the fastening flange (10), to which end the contact means in the region of the flange (10) are distributed and suitably led to the plug-in connector device (14, 34).

10. An arrangement according to one or more of the preceding claims,
**characterised in that**
when flat conductors (16) are used, the holders (2) are equipped with variously positioned contacting means for the strip conductors (17c) corresponding to their sequence on the bumper coverings or bumper bars (12), since a different strip conductor (17c) must be contacted in each case, wherein contacting is via tuning-fork contacts (17d), in which case the plug-in connector contacts are always contacted in the same way and unnecessary contacting paths (17e) are removed in the region of the pick-off on the strip conductors (17c).

11. An arrangement according to one or more of the preceding claims,
**characterised in that**
in the case of foil conductors (16) a punched grid is provided in the region in which the foil conductor (16) is to contact the contacts of the respective holder (2), wherein the strip conductors (17a to 17c) are contacted by an equal number of spaced-apart strip conductors which to this end run transversely at an angle of 90°, so that each strip conductor (17c) contacts one of the transverse conductors at a point of intersection, wherein in the contact region the various signal lines (17c) are always connected to a contact by punching out appropriate parts of the grid.

12. An arrangement according to one or more of the preceding claims,
**characterised in that**
when the electric lead (16) is contacted in the region of an end face (31) of the holder (2), the flat or foil conductor (16), in the region of a first edge (15) of the flange (10), is led on the flange (10) and thence over the cylindrical part (30) of the holder (2), wherein contact is made in the region of the end wall (31) and thence over the cylindrical part (30) of the holder (2), and is led down to an edge (15) of the flange diametrically opposite the first edge (15) of the flange (10).

13. An arrangement according to claim 9,
**characterised in that**
the flat or foil conductor (16), over its entire path along the holder (2), is integrally formed therewith, especially by encapsulation or injection-moulding.

14. An arrangement according to one or more of the preceding claims,
**characterised in that**
on its outer end face (41) the sensor (3) has a peripheral annular flange (50) which fits into a corresponding annular groove (51) in the bumper covering or bumper bar (12), wherein an outer surface (41) of the sensor (3) preferably ends flush with the outer surface of the bumper covering (12).

15. An arrangement according to any of the preceding claims,
**characterised in that**
projecting plug-in contacts (25; 35) are provided on the plug-in connector device (14, 24; 34, 45) and are insertable into corresponding recesses (26; 36) in the plug-in connector device (14, 24; 34, 45).

## Revendications

1. Dispositif de détection d'un système d'aide au stationnement pour un habillage de pare-chocs ou d'une baguette de protection, comportant une pluralité de supports (2) chacun configurés pour recevoir un capteur (3), avec des dispositifs d'enfichage (14, 24 ; 34, 45) correspondants prévus sur le support (2) et sur le capteur (3) pour immobiliser par encliquetage le capteur (3) sur le support (2),
**caractérisé en ce qu'**
on prévoit un câble électrique (16) sur le support (2), le support (2) et le câble électrique (16) sont reliés solidement pour former une seule pièce et le câble électrique (16) relie la pluralité de supports (2) successivement entre eux, conformément à leur succession dans l'habillage de pare-chocs ou la baguette de protection latérale.

2. Dispositif selon la revendication 1,
**caractérisé en ce que**
le câble électrique (16), du moins dans la zone où les pistes conductrices (17a à 17c) du câble électrique (16) sont en contact électrique avec le support (2) ou le dispositif d'enfichage (14, 34) du support (2), est injecté avec le support (2), encapsulé ou relié solidement avec un couvercle posé dessus et encliqueté et/ou collé.

3. Dispositif selon la revendication 1 ou la revendication 2,
**caractérisé en ce que**
les dispositifs d'enfichage cachés (14, 24 ; 34, 45) garantissent une alimentation en courant électrique du capteur lorsque le capteur (3) est monté.

4. Dispositif selon l'une quelconque des revendications précédentes,
**caractérisé en ce que**
les câbles électriques (16) sont des conducteurs plats ou souples (16) en contact électriquement conducteur avec le dispositif d'enfichage (14, 34) du support (2).

5. Dispositif selon l'une quelconque des revendications précédentes,
**caractérisé en ce que**
la mise en contact avec des conducteurs plats est assurée par des contacts à borne à guillotine ou des contacts à fourche (17d) et, avec des contacts souples, par des contacts par perforation, des contacts à fourche (17d) ou des contacts à sertir.

6. Dispositif selon l'une quelconque ou plusieurs des revendications précédentes,
**caractérisé en ce que**
des premiers moyens d'encliquetage (6, 39) prévus sur le support (2) et des deuxièmes moyens d'encliquetage (44) sur le capteur (3), coopèrent pour s'encliqueter l'un avec l'autre et immobiliser le capteur (3) dans le support (3), lorsque le capteur (3) est entièrement inséré dans le support (2).

7. Dispositif selon l'une quelconque ou plusieurs des revendications précédentes,
**caractérisé en ce que**
le support (2) et le capteur (3) comportent chacun un dispositif anti-rotation (38, 43 ; 14, 24 ; 34, 45) qui coopère lors de l'insertion du capteur (3) dans le support (2) et/ou lorsqu'il est inséré.

8. Dispositif selon l'une quelconque ou plusieurs des revendications précédentes,
**caractérisé en ce que**
les dispositifs d'enfichage (14, 24 ; 34, 45) sont la sécurité anti-rotation.

9. Dispositif selon l'une quelconque ou plusieurs des revendications précédentes,
**caractérisé en ce que**
le câble électrique (16) traverse le support (2) au niveau d'un dispositif d'enfichage (14) disposé latéralement sur une douille de réception (4) du capteur (3), les pistes conductrices (17a, 17b et 17c) nécessaires ou souhaitées étant mises respectivement en contact avec des moyens de mise en contact appropriés, ou bien le câble électrique (16) traverse le support (2) au niveau d'une face avant (31) du support (2), les pistes conductrices (17a, 17b et 17c) respectivement nécessaires étant mises en contact à cet endroit avec des moyens de mise en contact appropriés, ou bien le câble électrique (16) traverse le support (2) au niveau de la bride de fixation (10), les moyens de mise en contact étant répartis pour ce faire au niveau de la bride (10) et guidés de manière appropriée vers le dispositif d'enfichage (14, 34).

10. Dispositif selon l'une quelconque ou plusieurs des revendications précédentes,
**caractérisé en ce que**
lorsqu'on utilise des conducteurs plats (16), les supports (2) sont équipés de moyens de mise en contact des pistes conductrices (17c) positionnés différemment en fonction de leur succession sur les habillages de pare-chocs ou baguettes de protection latérale (12), et on met une autre piste conductrice (17c) respectivement en contact, la mise en contact étant assurée par des contacts à fourche (17d) réalisant la mise en contact des contacts enfichables toujours de la même façon, en retirant les chemins de mise en contact (17e) inutiles au niveau du prélèvement sur les pistes conductrices (17c).

11. Dispositif selon l'une quelconque ou plusieurs des revendications précédentes,
**caractérisé en ce que**
avec des conducteurs souples (16) on prévoit, dans la zone où le conducteur souple (16) doit mettre les contacts du support (2) respectif en contact, une grille estampée sur laquelle les pistes conductrices (17a à 17c) sont mises en contact par un même nombre de pistes conductrices écartées l'une de l'autre et formant un angle de 90°C par rapport à celles-ci, de sorte que chaque piste conductrice (17c) met en contact l'une des pistes conductrices transversales sur un point de croisement, les différents câbles de signalisation (17c) étant toujours posés sur une zone de contact au niveau de celle-ci par estampage de parties de grille correspondantes.

12. Dispositif selon l'une quelconque ou plusieurs des revendications précédentes,
**caractérisé en ce que**
lors de la mise en contact du câble électrique (16) au niveau d'une face avant (31) du support (2), le conducteur plat ou souple (16) passe au niveau d'une première arête (15) de la bride (10) sur la bride (10) et de là par la partie cylindrique (30) du support (2), la mise en contact ayant lieu au niveau de la paroi frontale (31), et redescend de là par la partie cylindrique (30) du support (2) et est guidé vers une arête (15) de la bride (10) diamétralement opposée à la première arête (15) de la bride (10).

13. Dispositif selon la revendication 9,
**caractérisé en ce que**
le conducteur plat ou souple (16), sur tout son parcours le long du support (2) forme une seule pièce avec celui-ci et, en particulier, est encapsulé ou injecté.

14. Dispositif selon l'une quelconque ou plusieurs des revendications précédentes,
**caractérisé en ce que**
le capteur (3) possède, sur sa face avant extérieure (41), une bride annulaire périphérique (50) enchâssée dans une rainure annulaire (51) correspondante de l'habillage de pare-chocs/la baguette de protection latérale (12), une face extérieure (41) du capteur (3) affleurant de préférence avec la face extérieure de l'habillage de pare-chocs (12).

15. Dispositif selon l'une quelconque ou plusieurs des revendications précédentes,
**caractérisé en ce que**
sur le dispositif d'enfichage (14, 24 ; 34, 45), des contacts enfichables (25 ; 35) en saillie peuvent être enfichés dans des logements (26 ; 36) correspondants du dispositif d'enfichage (14, 24 ; 34, 45).
